# EUROPEAN PATENT APPLICATION

(11) **EP 1 841 192 A1**
(43) Date of publication of application: **03.10.2007**
(21) Application number: 07001549.0
(22) Date of filing: 25.01.2007
(51) Int. Cl.: H04M 3/42

(54) **Presence and preference-enabled push to talk telephony system**

(30) Priority: 31.03.2006 US 278361
(71) Applicant: Alcatel Lucent, 75008 Paris (FR)
(72) Inventor: Wengrovitz, Michael S., MA 01742 Concord (US)
(74) Representative: Schäfer, Wolfgang

(57) **Abstract**

A system (100) for establishing a unilateral voice communication event between at least two nodes connected to a network has a first server (123) operable on the network for receiving a request from a requesting node (128) on the network and for forwarding the request for execution, a second server (123) operable on the network, the second server (123) for formatting the request in the form of a sequence of commands based on information associated with the request, the command sequence to establish the event; and a third server (114) operable on the network, the third server (114) for receiving commands of the command sequence and for establishing the event and implementing at least one state of operation on the recipient node. The event request is initiated by a single action performed at a requesting node (128) and the established event is automatically answered without any physical tasking required or event alert received by the recipient node (129,130).

## Description

### CROSS-REFERENCE TO RELATED APPLICATIONS

Not Applicable.

### BACKGROUND OF THE INVENTION

### 1. Field of the Invention

The present invention is in the field of telephony communications including computer telephony integrated (CTI) systems and relates particularly to methods and apparatus for pushing one-way voice and media between parties.

### 2. Discussion of the State of the Art

The field of telephony communications has experienced many technology improvements over the recent years relating to CTI integration, multi-party communications, intelligent routing, end usability, enhanced features and the like. CTI management of telephone switching has provided many of these capabilities. Seamless bridging between traditional switched telephony and Internet protocol telephony and accompanying standard protocols existing today has enabled communication sessions and media transfer sessions that encompass end users operating across a wide variety of communications devices.

In typical enterprise communication systems, workers or associates have telephone extension numbers registered with an existing CTI-enabled PBX telephony switch. A caller off-hooks a PBX telephone set and dials an extension to initiate a call. The recipient is alerted by some form of ringing or alerting event and off-hooks a telephone set to accept the call. The physical nature of such a call is bidirectional voice.

One area of telephony communication that has undergone much recent evolution relates to instant voice transmission whereby a party wishing to initiate a voice call simply depresses a pre-designated call button on a telephone or computer screen. While such a call event may be initiated from the caller's perspective by invoking a pre-programmed speed dial button for example, or by double clicking a call icon on a graphical user interface (GUI), the recipient still typically receives a call alert and physically off-hooks his or her set, or depresses a button, in order to accept the call. The physical nature of the call is again bidirectional and both parties of the call hear each other.

One area of communication not directly related to telephony per se, is use of intercom-type alert or communications systems. In these systems, a person may push a button and open a unidirectional voice connection to another intercom unit, or to multiple other always-on speaker units. These systems are closed systems requiring separate dedicated wiring and are limited to fixed units geographically placed in strategic positions.

Still another area of communication is radiophone or walkie-talkie services offered through some wireless carriers. While users may select a recipient from a contact list to contact using a single action, and the designated recipient may instantly hear the sender's voice, the system is limited to special end units, and must be carried on a special wireless provider network. There is no flexibility for using existing telephony systems, networks, or end devices.

Still another area relates to fixed paging systems using strategically located overhead speakers. These systems are not dynamic in nature and are inflexible for use in collaborative telephony environments such as may be required between individuals in an enterprise perhaps, involving collaboration across geographically distributed sites.

It is desired in telephony communications that certain processes dealing with call handling be streamlined, especially where a large number of users exist and call traffic is very high. Traditional solutions including intelligent call routing, automated voice intervention, automated re-direct, priority queuing, load balancing, and connection-oriented-cost-telephony (COST)/Internet-protocol-telephony (IPT) integration and so on, focus on reducing overall traffic to improve efficiency and service but do not address the, often complex, routines of the end user or users accepting calls. Likewise, many bidirectional calls taking place in a fast-paced environment are really unnecessary and could be handled in a more efficient manner. For example, one worker might typically setup a conventional voice call and ask another worker "are you busy" only to learn that the answer is "yes please call me back at 2pm".

Therefore, what is needed in the art is a system and method for enabling instant voice and media events to be transacted over an existing PBX telephony system between one or more recipients using a one touch initiation and requiring no action by recipients to receive the events. A system such as this, integrated with a PBX or other type of telephony system would streamline communication tasks, reduce overall traffic, and still enable traditional modes of communication where and when desired and required.

### SUMMARY OF THE INVENTION

According to an embodiment of the present invention, a system is provided for establishing a unilateral voice communication event between at least two nodes connected to a network the event request initiated by a single action performed at a requesting node and the established event automatically answered without any physical tasking required or event alert received by the recipient node. The system includes a first server operable on the network for receiving a request from a requesting node on the network and for forwarding the request for execution, a second server operable on the network having communication access to the first server, the second server for formatting the request in the form of a sequence of commands based on information associated with the request, the command sequence to establish the event, and a third server operable on the network having communication access to the second server, the third server for receiving commands of the command sequence and for establishing the event and implementing at least one state of operation on the recipient node.

In one embodiment, the network is a local-area-network connected to a private branch exchange. In another embodiment, the network is a wide-area-network. In one embodiment, the requesting node and the receiving node are private-branch-exchange (PBX) speakerphones connected to a computer-integrated-telephony (CTI)-enhanced PBX telephony switch. In a preferred embodiment, physical tasking comprises manually off hooking a handset or interacting with any feature on the recipient device and event alert includes any audible or visual indication of the event.

In one embodiment, the requesting node and or the receiving node are enabled for session-initiation-protocol and voice-over-Internet-protocol. In one embodiment, the receiving node is a voice-enabled automated media server and the requesting node is one of one an Internet protocol telephone, a PBX telephone, a cellular telephone, a SIP phone, or a software telephony application resident on a computing appliance. In one embodiment, the command sequence is a CTI command sequence executable at a PBX switch or a soft PBX switch. In a preferred embodiment, the single action performed to request the event is one of pushing a button, selecting a display icon, or voicing a command .

In one embodiment, presence information is returned over an established connection if a recipient is not available. In one embodiment, the first server is a presentation server, the second server is an application server, and the third server is a CTI/PBX telephony server. In one embodiment, the system further includes an additional application adapted as a conferencing bridge.

According to another aspect of the present invention, a method for establishing a unilateral voice event between a requesting node and one a recipient node over a network is provided. The method includes the acts (a) identifying, at the requesting node, the recipient node to receive the event (b)sending a request to an application to establish the event, (c) executing a command sequence of instructions to build the connection over which, the event will be carried, (d) placing a call to and answering the call at the requesting mode according to the command sequence, (e) placing a call to and answering the call at the recipient node according to the command sequence, and (f) bridging the established connections for active use.

In one aspect of the method, in act (a), the sending node and the recipient node are one of or are a combination of a PBX telephone, an IP telephone, a SIP telephone, a cellular telephone, or a software telephony application. In a preferred aspect, in act (b) the request is achieved through a single user task comprising pushing of a mode button on a phone set or invoking an icon or list entry in a graphics user interface (GUI) for the duration of the event. In one aspect, in act (c), the sequence is a CTI command set.

In one aspect, in act (d) and in act (e), placing and answering calls is performed by a CTI/PBX switch upon instruction from a conference bridging application. In a variation of this aspect, in act (e), answering the call includes activating the mute state of the microphone on the device to mute outgoing voice and background noise. In another aspect, in acts (d) and (e), answering the call is performed with no physical tasks required at the recipient device.

In yet another aspect, the method further includes an act (g) for requesting release of the recipient node of the event from the point of the requesting node, the release action causing tear down of the connection to the one or more devices. In still another aspect, the method further includes an act (g) for returning a message to the requesting node in the event that the user of the recipient node cannot take the event. In this aspect, the message is one of an instant message, a voice message, or a text message. In a variation of this aspect, the message includes interactive options for contacting the recipient.

In still another aspect, the method further includes an act (g) for escalating the unilateral voice session into a conventional call. In a variation of this aspect, the request for escalation is achieved through a single action performed by the requestor. In this aspect variation, the single action is one of depressing a mode button, clicking on a PC display icon, or voicing a command .

### BRIEF DESCRIPTION OF THE DRAWING FIGURES

Fig. 1 is an architectural overview of an enterprise domain 100 over which a unilateral voice and media communication may be practiced over a legacy PBX system according to an embodiment of the present invention.

Fig. 2 is a plan view of the PBX telephone of Fig. 1 illustrating basic one-touch unilateral voice-send capability according to one embodiment of the present invention.

Fig. 3 is a partial plan view of the telephone of Fig. 2 according to an embodiment of the present invention.

Fig. 4 is a flow chart illustrating a sequence for initiating and concluding a unilateral voice event from an existing PBX phone to another according to an embodiment of the present invention.

Fig. 5 is a flow chart illustrating a sequence for establishing a unilateral voice event between 2 parties using a conference bridge.

Fig. 6 is a flow chart illustrating a sequence for practicing unilateral voice event between 2 parties according to another embodiment of the present invention, where the event is initiated through usage of a PC/GUI.

Fig. 7 is an exemplary screen shot of a client interface displayed on a PC/GUI, which may be used to initiate and terminate PTT events according to an embodiment of the present invention.

Fig. 8 is a flow chart illustrating a sequence for determining presence information and sending a response triggered by an incoming PTT event according to an embodiment of the present invention. Please see sequence drawings added 10a-c, 11, and 12.

Fig. 9 is a flow chart illustrating a sequence for attempting a PTT event with an option of automated treatment or interactive alternative based on presence information according to one embodiment of the present invention.

Fig. 10A is a block diagram illustrating a communications network supporting a push-to-talk system architecture 1100 according to an embodiment of the present invention.

Fig. 10B is a block diagram illustrating the system architecture of Fig. 10A enhanced with SIP capability.

Fig. 10C is a block diagram illustrating a SIP embodiment with respect to the system of Fig. 10B with added connected devices illustrated.

Fig. 11 is a sequence diagram illustrating interaction with a media server according to an embodiment of the present invention.

Fig. 12 is a sequence diagram 1300 illustrating an advanced embodiment for establishing a unilateral voice event between two IP touch set terminals.

### DETAILED DESCRIPTION

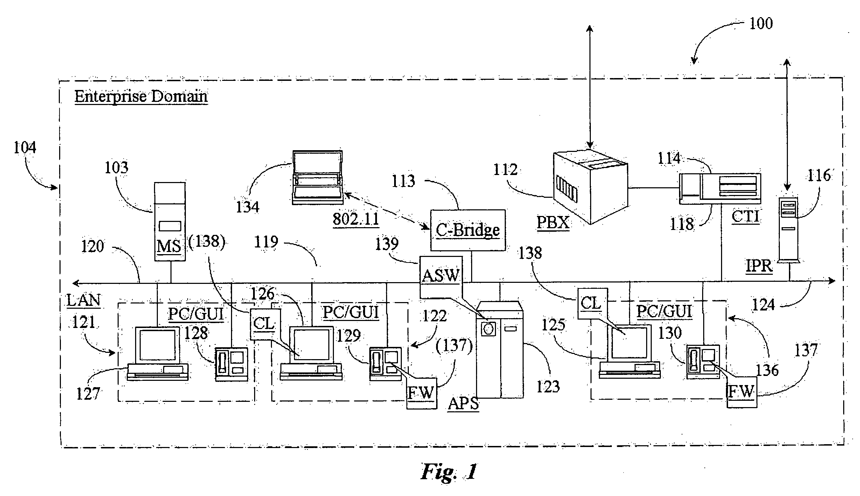

Fig. 1 is an architectural overview of an enterprise domain 100 over which a unilateral voice and media communication may be practiced over a legacy PBX system according to an embodiment of the present invention. Enterprise architecture 100 is illustrated in his example and may be analogous to any corporate or company enterprise domain architecture having a plurality of workers or associates who routinely communicate with each other and with outside entities including persons. Enterprise 100 employs a local-area-network (LAN) 120 for the purpose of enabling network communication connectivity between employees and systems, for example, and for the purpose of providing shared access to external networks sub-networks not illustrated here. LAN 120 may be enabled with transfer control protocol over Internet protocol (TCP/IP) ad therefore capable of supporting IP voice and data transmission including IP telephony and other standard messaging protocols LAN 120 may be an Ethernet network that may also support various wireless protocols such as 802.11 technology.

Enterprise 100 has a Internet Protocol-enabled router (IPR) 116 provided therein and connected to LAN 120 for communication. IPR 116 provides network access to external networks such as LAN, WAN, and Internet over T1 or E1 cabling. Other network connection methods may also be employed within enterprise 100 without departing from the spirit and scope of the present invention. LAN 120 supports a plurality of enterprise work stations for intercommunication. These are a workstation 121, a workstation 122, and a workstation 136. One with skill in the art will appreciate that there may be many more LAN-connected work stations within enterprise 100 than are illustrated in this example. The inventor illustrates three such stations and deems the number sufficient for the purpose of explaining the present invention. Workstation 121 includes a personal computer (PC) 127 with a graphics user interface (GUI) and a private branch exchange (PBX) telephony set 128. Telephony set 128, in a preferred embodiment, is a standard PBX telephone set with a speakerphone capability and is, in one embodiment, programmable having a graphics display. In another embodiment, set 128 is a session initiated protocol (SIP) capable telephone. Work station 122 and work station 136 are similarly equipped including PC/GUI 126 (station 122), PC/GUI 125 (station 136), and telephone set 129 (station 122) and telephone set 130 (station 136).

PBX telephony sets 128-130 have connection, in this example, to a central PBX telephony switch 112 via LAN 120. Likewise, sets 128-130 may also receive IP telephony calls over LAN 120. In one embodiment, sets 128-130 may be IP telephones capable of VoIP, Instant messaging, and other IP communications directly over LAN 120 without the aid of a connected PC. In such embodiments, phones 128-130 would have direct LAN connection. In this embodiment, a user telephony interface may be provided that is displayable either from the PC or from a display screen on the telephone extension.

A PBX telephony switch 112 is illustrated in this example and is CTI enabled via a CTI processor 114 connected thereto via a CTI link. Processor 114 is adapted to provide control over certain PBX functions and switching operations. Processor 114 is accessible from LAN 120 via cabling 118.

Enterprise LAN 120 also supports an application server (APS) 123, and a telephony conference bridge 113. It is noted herein that application server 123 and conference bridge 113 may be combined onto a single server node without departing from the spirit and scope of the present invention. The inventor illustrates them separately in this example for discussion purposes only in distinguishing between functions. In this example, LAN 120 also supports a wireless user operating a Laptop 134 accessing LAN 120 using 802.11 wireless communications protocol and hardware.

In the current configuration illustrated in this example, enterprise 100 is capable of dual communications modes, namely CTI-enhanced connection oriented cost telephony (COST) and pure data network telephony (DNT). In a preferred embodiment of the present invention one-touch unilateral voice and messaging capability is provided through a software application that includes application program interfaces for client stations and telephones, a conference bridge application and one or more CTI applications controlling one or more PBX systems. In all embodiments of the present invention, communications devices practicing the present invention must have the capability of receiving external commands to mute and un-mute microphone function and to off hook in active speaker mode without user intervention. In some cases where physical phone sets are used, these may be manufactured with a push to talk (PTT) button that may be used to initiate a unilateral voice event. It should be noted herein that other telephony implements such as SIP capable telephones and soft telephones installed on other hardware such as PCs, Laptops, PDAs, and so on may practice the present invention so long as the required muting functions are supported and that an initiation command may be propagated to and from the device or application.

Application server 123 is illustrated in this example and shown connected to LAN 120 for communication. Application server 123 includes application software (ASW) 139 installed and executable thereon and invoke able for service through remote initiation event comprising a push-to-talk action performed by any connected user of the system from an initiating PC/GUI station or from any PBX set. ASW 139 may include one or more specific application routines adapted to receive commands from a presentation server application (not illustrated), which may also reside on server 123. One or more such routines may provide the control language understood by a CTI application for enhancing the PBX system to perform the required tasks to practice the invention.

A client application (CL) 138 is provided for enabling PC/GUI stations to practice the present invention. Client 138 is illustrated as installed on and executable from PC/GUI 125 and from PC/GUI 126. It may be assumed herein that each enabled PC/GUI including Laptop 134 has an instance of CL 138 installed on and executable there from. CL 138 may include a desktop user interface for selecting contacts and initiating unilateral voice communications and APIs to peripheral communications applications for performing peripheral communications tasks based on presence information available at the time of communication attempts. Such peripheral applications may include messenger applications, email applications, calendar-based scheduling applications and so on. It is important to note herein that CL 138 may provide PTT capability that may not be supported by a particular telephone set. In such a case, the commands are sent from the PC interface and the set is a speaker set accessible to the PBX system.

A firmware (FW) component 137 may be provided to PBX telephone sets to enable them to be used in the practice of the present invention. FW contains the basic instructions and routines required of a PBX set to initiate and to receive unilateral voice communication events, including routines for escalating push-to-talk events to the state of a conventional voice call. FW 137 is illustrated herein as installed on set 130 of station 136 and on set 129 of station 122. However, it may be assumed that all PBX sets used to practice the present invention have a version of FW installed thereon and executable there from. In one embodiment, depending on the design and capabilities of a PBX speakerphone set, FW 137 may instead be downloadable in the form of a software plug-in or application program interface. Moreover, FW 137 may vary in design and capability according to the nature of the host telephone set it resides on. For example, a session initiation protocol (SIP) enabled telephone may require a slightly altered version of FW 137 from a standard PBX speakerphone set.

In one embodiment of the present invention, C-Bridge 113 is not specifically required in order to practice the invention successfully. In another embodiment of the present invention, PBX 112 is not specifically required in order to practice the present invention successfully. In yet another embodiment, both C-Bridge 113 and PBX 112 or PBX 105 interoperate in sequence to enable certain embodiments of the present invention to be practiced.

To practice the present invention within enterprise domain 100, a user for example one operating from station 136 may display and select a contact using PC/GUI 125 aided by CL 138. The user may, in another case, display and select the contact using PBX 130 aided by FW 137. The selected contact may be operating at any other connected station within the domain and reach of the PBX system. In one embodiment, the selected contact may be any user operating a SIP-enabled communications device or platform.

After selecting a contact, the initiator simply pushes a button, or performs some other single action to send voice directly to the destination device. At the destination device, the incoming voice is immediately heard without requiring any action of the receiver and the initiator is, in a preferred embodiment, prevented from hearing voice or background noise from the destination during the event. Releasing or undoing the action performed to initiate the event releases the connection and the call leg is torn down. The destination user may in turn respond at any time after the initial event in the same fashion by initiating a single action such as pushing a button, performing a keystroke, or by a single computer mouse action.

In one embodiment, a unilateral voice event may be transitioned into a conventional call by performing a single action during the initial event. In one embodiment, the system may be provided as an enterprise solution wherein initiators and contacts are employees and associates of the enterprise. In one embodiment, an automated system such as a media server illustrated herein as a media server 104 connected to LAN 120 may be interacted with using the methods of the present invention. MS 104 may be a destination party whereby a user may select that system and initiate a one-touch unilateral voice event to that system with an option to transition the event into a conventional interactive media session for acquiring services, media, and/or for initiating tasks.

In one embodiment, an enterprise with a legacy PBX system may have access to another PBX system over a network such as a WAN network. In this case, it is possible to practice the invention between PBX islands localized such as on a campus or geographically disparate such as separated by the Internet. In the preceding case, a centralized application server capable of controlling one or more PBX switches in the system may be required. As well, there might by application of the present invention to a virtual PBX (VPBX) system by leveraging third party control as long as the end point devices used support off hooking in speaker mode and microphone muting to control speaker output, those functions controllable from an external application via command control. Likewise, those end point devices must also support a physical way to initiate the unilateral event from a local interface or one accessible to the device. There are pluralities of conceivable network and PBX architectures that may be adapted to practice the present invention and the scope of the present invention should not be limited to a single enterprise physical domain.

There are many possibilities. More detail about the software capabilities and methods of interaction using the present invention will be detailed below.

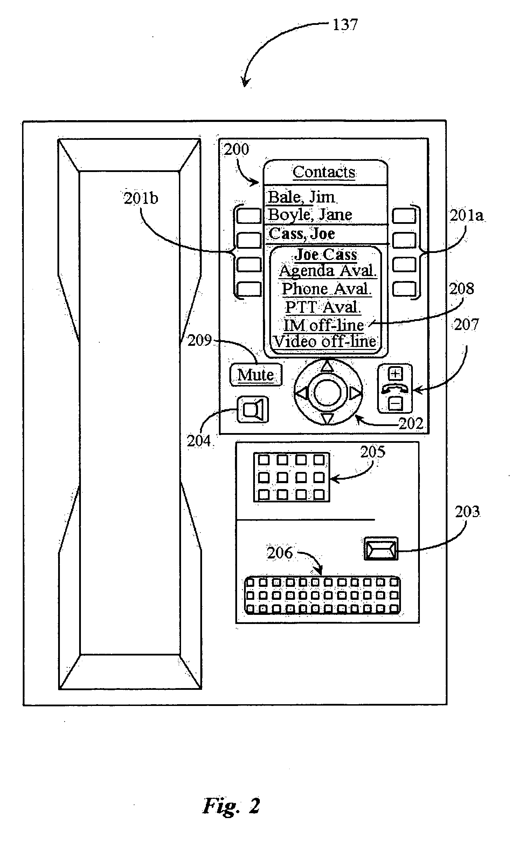

Fig. 2 is a plan view of PBX telephone 137 of Fig. 1 according to an embodiment of the present invention. Set 137, may in one embodiment be an IP touch set without departing from the spirit and scope of the present invention. Set 137 includes, in this example, a display screen 200 for displaying contacts listed as possible destination addresses or numbers registered for unidirectional voice send capabilities as might be compiled or assembled by a user, or names returned as a result of a search of a directory or other data source.

Display 200 is associated with a plurality of mode buttons arrayed on either side of the display. Mode buttons 201a are grouped on the right side of display 200 and mode buttons 201b are grouped on the left side of screen 200. Mode buttons 201a and 201b may be programmable for task assignment. In addition, certain ones of mode buttons 201a and 201b may be dynamically programmable based on information available to PBX 137 including activity results that might be displayed in screen 200 as a result of user scrolling highlighting and selecting a contact.

PBX set 137 is speaker phone-enabled such that incoming voice may play over the speakers of the set without requiring any interaction on the part of an operator of the device such as manually off-hooking the set.

As a PBX speaker set, phone 137 has a standard dial pad 205 for placing telephone calls. A speaker mode icon 204 may be programmed to light when an incoming voice event is detected and is about to occur. A speaker volume toggle control 207 is provided for enabling the user to set volume level on the speaker set. In a preferred embodiment, telephone 137 may receive a unilateral voice event whereby the phone set is PBX controlled to automatically answer the event so the voice automatically plays over the speaker without requiring the end user to manually off-hook the telephone or to otherwise perform any pick-up operations. Likewise, a PBX may control the mute function of set 137, illustrated herein as a mute button 209. Mute button 209 controls muting and un-muting the microphone of the set.

Telephone 137 has messaging button 203 and a keyboard configuration 206 that enable a user to configure and send messages to any other listed contact or contact manually input into the system. A navigation control interface 202 is provided to enable a user to scroll through information displayed on screen 200 during use. For example, a user may employ up and down navigation arrows to scroll through and highlight contacts contained in a displayed list of contacts. Right and left navigation arrows enable horizontal scrolling and highlighting in such as menu options and the like to configure preferences. A select button in the center may be employed for selecting a contact for interaction with or for setting a desired configuration option.

It is important to note herein that telephone 137 is relatively dumb and light in that it is a PBX terminal, in this example, that relies on an outside system to provide certain functions and capabilities. FW 137 of Fig. 1 above provides the necessary API connectivity to an external system including software for enabling dynamic mode programming, for presenting information on screen 200, for setting and receiving preference and presence information, and so on. A presentation server application (PRS), not illustrated, may be used in front-end data communication from a sever processor such as ASW 123 or from another system node or even a connected PC/GUI provided and connected to LAN 120 of Fig. 1 above. As a relatively dumb and light terminal, PBX telephone 137 relies on external background communication with an application in order to display rich information and to enable routines like dynamic programming of mode buttons according to selected options and, in some embodiments, presence information determined at the time of use.

Screen 200 has displayed therein, a plurality of contacts listed as possible destinations for one-touch voice transactions. In this case, the listed contacts are human and include Jim Bale, Jane Boyle, and Joe Cass (intended as fictitious names only). A user may highlight and select from any of those contacts to initiate a one-touch unilateral voice event that emulates a conventional push-to-talk voice event. Hence, the term "push-to-talk", which may be found associated with some prior art systems may also be referenced herein in association with a one-touch unilateral voice event of the present invention for reasons of clarity and simplicity in discussion only. Likewise, an incoming voice event attributed to one of those contacts, or any non-listed contact for that matter, as an origination number may cause the associated contact or name of the non-listed caller to be isolated for display in screen 200 during the event indicating ID of the event initiator.

It is clear in this example that any one of mode button grouped under groupings 201a or 201b may be assigned as a push-to-talk button in one embodiment without departing from the spirit and scope of the present invention. In one embodiment, a user may utilize navigational control interface 202 to scroll through listed contacts and to highlight a contact, in this case, the contact Cass, Joe. This action may make certain presence information available such as information displayed in a popup screen 208. Screen 208 contains current presence data about Joe Cass. It states that his agenda is available and that he is available for phone interaction. It also states that he is accepting push to talk events. However, the presence information indicates that he is not online for IM and is not logged in for video. The presence options presented within screen 208 are exemplary and may include fewer or more indicators than are illustrated here without departing from the spirit and scope of the present invention.

In one embodiment, a user may also navigate popup 208 using control 202 and scroll through the presence options. In one embodiment, the options might be interactive such that by highlighting one of them and depressing the center button on control 202 may execute a task related to that option. Therefore, a PTT event may be initiated, in one case, from screen 208 by highlighting PTT Avail. and then depressing the enter (center) button on control 202. In one embodiment, screen 208 may be just presence information automatically presented in screen 208 when the contact name is highlighted.

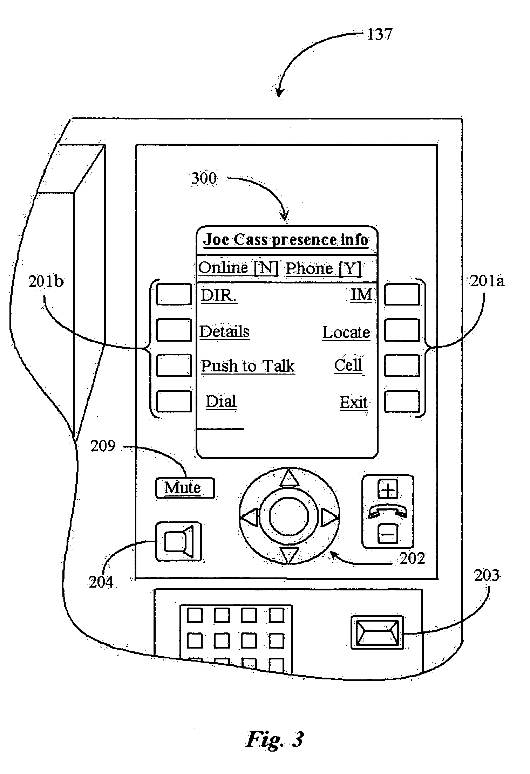

Fig. 3 is a partial plan view of telephone 137 of Fig. 2 illustrating program assignment of mode buttons in grouping 201a and grouping 201b according to an embodiment of the present invention after a contact has been selected for interaction. A screen 300 is illustrated in this example, which is analogous in physical description of screen 200 of Fig. 2 accept for the content illustrated within. In this example, Joe Cass was selected and his contact information is incorporated into the interface and associated with certain ones of buttons 201a and 201b. For example, the interface includes a Push To Talk button in group 201b that when depressed, initiates a unilateral voice event to Joe Cass at the designated telephone number or equivalent according to embodiments of the present invention. A dial button in grouping 201b is also shown and simply presents an option to dial the number as a conventional call. Similarly, there is an IM button in grouping 201a for launching an instant message. A cell button within grouping 201a simply presents an option for initiating a conventional call to Joe's cellular telephone. A directory button in group 201b enables the user to navigate to one or more directories. An exit button in group 201a enables the user to exit the immediate menu.

In this embodiment, the act of highlighting and selecting Joe Cass as a possible recipient of unilateral voice may automatically retrieve his current presence information served from an outside server. In this case, screen 300 indicates that Joe is not online and that is telephone is available to receive a call.

In this case however, the contact Joe Cass has been selected. In one embodiment, the information displayed on screen 300 equates to the associated mode buttons arrayed alongside the screen when any contact has been selected. There may be fewer assignments available or as many assignments as there are buttons without departing from the spirit and scope of the present invention. This embodiment depends on a robust presentation server to display the information in the screen equating the correct contact numbers or equivalents to the buttons. However this is not a requirement for practicing the present invention. Some or all of mode buttons in groupings 201a and 201b may be dedicated with reference to various capabilities. In this case, which is by no means required, when the contact is selected various options may appear in the screen including a push-to-talk option, whereby those options are equated to the associated mode buttons. Therefore, the user may depress any of those buttons to initiate a task related to communicating with Joe Cass, including push to talk.

Presence information can be updated in near real time using Extensible Messaging and Presence Protocol (XMPP) or other similar standards based protocols. The core presentation software and application software supports interoperability with user peripheral applications like itinerary, calendar, or scheduling applications based on a user desktop, device, or those that may be Web-based and accessible while the user is online. Therefore, the details option may be used to call up another user's presence information to the granularity of whatever the owner cares to publish including typical away messages, daily itinerary, weekly itinerary, and so on. Details may also include forwarding contact information.

One presence feature button labeled "Locate" (grouping 201a) is optionally provided to enable a user to locate a person that may not be at his or her normal station. This feature relies somewhat on system knowledge of where that particular person might be or should be at any given time. A combination of tracking data and presence data may be leveraged to provide the ability of the system to locate a person. Therefore, a user pushing "Locate" may receive a display including contact information related to the "current" location of that person as known by the system. This feature is especially useful for enterprise environments requiring employees to login to a central server and report their activities or those that have corporate activities assigned to them by a system authority. An exit button (grouping 201a) is provided to enable a user to exit the screen or any mode the telephone is set to.

According to a preferred embodiment, a push-to-talk button (grouping 201b) is provided and adapted as described above to enable one-touch initiation of unilateral voice to another user's device or PBX speaker set. The push-to-talk button is assigned the correct telephone number or equivalent (IP address, machine address, etc.) of the selected contact, typically, when the user selects the contact so that a single action of depressing, in this case, the PTT button causes a unilateral voice call to be initiated to the device of the recipient. In an alternate embodiment, local numbers may be stored locally on a participating device. The push to talk button remains in a state of activation by the initiating user simply keeping the PTT button depressed while the initiator speaks emulating a conventional walkie-talkie type communication, and the connection to the recipient may be torn down when the initiator releases the PTT mode button. At the recipient's end, the receiving device is enabled with speaker phone and is controlled by PBX, or in some embodiments, a conference bridge, to answer the incoming event automatically playing the event over the external speaker set while at the same time preventing any sound on the receiving end from being heard at the source of the call by muting the microphone of the receiving set thereby emulating a one-way communication transaction sequence.

In one example, after consulting presence information, the initiator may be informed that a push to talk connection will not be accepted at the current time but the recipient may be reached using a conventional call at the same or at a different telephone number. The dial button may be assigned with this number based on the presence information known. The end device in this case may be any communications device capable of supporting voice and the required functions of off hooking with speaker on and muted microphone.

Speaker and Mute buttons 204 and 209 may be lit or unlit during operation according to state. In a unilateral voice transaction, the initiating set has an un-muted microphone so voice travels to the destination, while the recipient set has a muted microphone so no voice or other background noise travels back over the connection to the sender. The initiator may have his speaker icon lit even though he cannot hear the recipient. If the recipient transitions the call to a conventional call then the speaker at the initiator's set would play the voice. The recipient has his speaker lit so that the recipient may hear the originator's voice. The receiving set must be able to receive commands that may off-hook or answer the call in speaker mode without lifting a handset. Likewise the mute function must be controllable from the PBX. The initiator typically has his speaker set to on and his microphone mute function set to off.

A unilateral voice call emulates a walkie-talkie type push to talk sequence accept that physically over the connection a conventional two way call is achievable in a smooth transition by a number of different ways. In one embodiment, a recipient of a unilateral voice call may transition the call while in session to a conventional voice call simply by manually un-muting his microphone by depressing mute button 209 once. The initiator learns of the conventional call when he releases the PTT button yet his speaker icon stays lit.

An initiator of a unilateral voice call may release his PTT button and wait for a unilateral response. When he hears the response, he may then transition the call by un-muting his microphone. In another embodiment, releasing a PTT button and then depressing it again several times within a time period may transition a unilateral event into a conventional call. Still another way would be that the callee simply lifts his handset while the unilateral event is in progress. In still another embodiment where associated GUI screens are available, screen pops may be sent to either the caller or callee as an invite to transition to a conventional call. In this embodiment, clicking on a call button might transition the call by sending a microphone un-mute command to the appropriate party.

One skilled in the art will appreciate that PBX telephone 137 and additional features may be provided in variant embodiments and designs without departing from the spirit and scope of the present invention. Likewise, the invention may be successfully practiced using some but not all of the illustrated features without departing from the spirit and scope of the present invention. For example, addition of consultation capability of current presence information to determine a course of action including whether to initiate a unilateral voice event is an enhancement feature of the current invention and is not specifically required in order to practice the invention. However, the ability to consider presence information enables an embodiment where dynamic assignments or options may be enabled using the mode buttons specifically to interact with an identified recipient of an event. In still other embodiments, the display functionality may be provided on a nearby desktop PC connected to the speaker set, which does not necessarily have all of the buttons or manual indicia illustrated on a telephone. Such controls may be based instead in a client interface analogous to CL 138 described with reference to Fig. 1. Other possibilities exist such as duplicating interfaces, one for the telephone screen and one for the desktop allowing the user to choose which interface to work from.

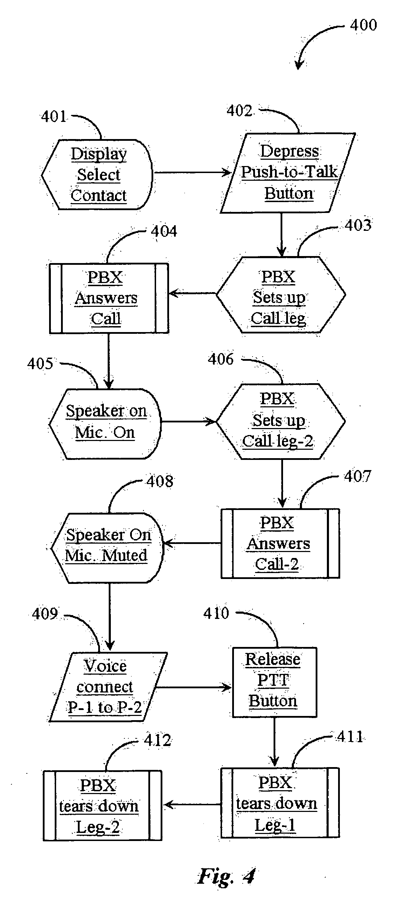

Fig. 4 is a flow chart illustrating a sequence for initiating and concluding a unilateral voice event from existing PBX phone point to another according to an embodiment of the present invention. It may be assumed in this example, that sequence 400 may be executed on a PBX speakerphone having a GUI displayed in a suitable screen or window. It must be noted herein that a PBX telephone may be a rather "dumb" device meaning that in order to perform many of desired tasks from the device itself, the device may be intelligently enhanced using an external software application referred to herein as a presentation server. In this example however, acts that would include involvement of external applications are omitted to illustrate just the basic functions of the sequence.

At act 401 a user wishing to initiate an event displays and selects a recipient contact identified from a list of contacts. The selected contact may be isolated by first navigating to highlight the contact and then activating selection of the contact by depressing an enter button analogous to the enter feature of navigation control interface 202 of Fig. 2. At act 402, the user may depress a push-to-talk (PTT) button to initiate the event, which is a unilateral voice event. In one embodiment, the PTT button is held down the duration of the event.

At act 403, the CTI-enabled PBX sets up a call leg to the user's PBX phone set. This command is forwarded to the PBX system by a CTI software routine or application providing intelligence to the switch. At act 404, a subsequent CTI command tells the PBX to answer the call to the user's PBX phone set thereby completing the setup to the initiating device from the PBX interface. At act 405, the microphone is unmuted and the speaker is enabled. In this case the mute button refers to muting or un-muting audible input sound including voice. At act 406, the PBX is directed to set up the second call leg or the leg to the identified recipient. The PBX then answers the call to the recipient at act 407. The call leg is complete at act 408 whereby the speaker is enabled to project the incoming voice and the microphone is held on mute to prevent voice or sound from being heard at the originating PBX speakerphone. Light emitting diodes may be provided as certain indicators that for example, a speaker is enabled or disabled and a mute button is enabled or disabled. The actual function of answering the call from the perspective of the recipient device and creating a mute state is enabled by CTI instruction to the controlling PBX that bypasses any user requirement of pushing a button or physically off hooking the telephone. Firmware or software provided with the PBX phone set enables the answer mode, which is controllable by the PBX system through CTI intelligence.

At act 409, a voice connection is established between party 1 and party 2 brokered through the PBX system. In a preferred embodiment, party 2 can hear party 1 but party 1 cannot hear party 2. At act 410, party 1 may terminate the connection by releasing the PTT button of act 402 thereby initiating a CTI instruction to the PBX switch to begin de-constructing the formerly established connection. The sequence described in this embodiment reflects the most basic sequence enabled by the present invention. In this basic sequence, no presence information or alternate interactive options based on presence information or preference data is presented to the user initiating the unilateral voice event. In this case, the contact list may be local to the user and the special commands are enabled through CTI software and the PBX functions not already standard are controlled through CTI integration at the switch. The CTI routines may be served from an application server hosted within a CTI processing node cabled to the PBX system. Essentially, this basic sequence may be used in a PBX system connecting any users having enabled telephones and access to a CTI-enabled PBX system. After party 1 releases the PTT button at 410, party 2 may immediately respond by depressing his or her PTT button and speaking. A time window may be provided at the end of a release action so that party 2 may respond before the connection is torn down. This action gives party 2 the option of initiating a unilateral voice communication back to party 1, even though party 1 may not have been listed as a contact of party 2. Therefore, the same sequence may be reversed the other direction.

It will be apparent to one with skill in the art that the acts of sequence 400 may be complimented with additional acts without departing from the spirit and scope of the present invention depending on the functional embodiment or communications mode being leveraged. Such embodiments will be described later in this specification.

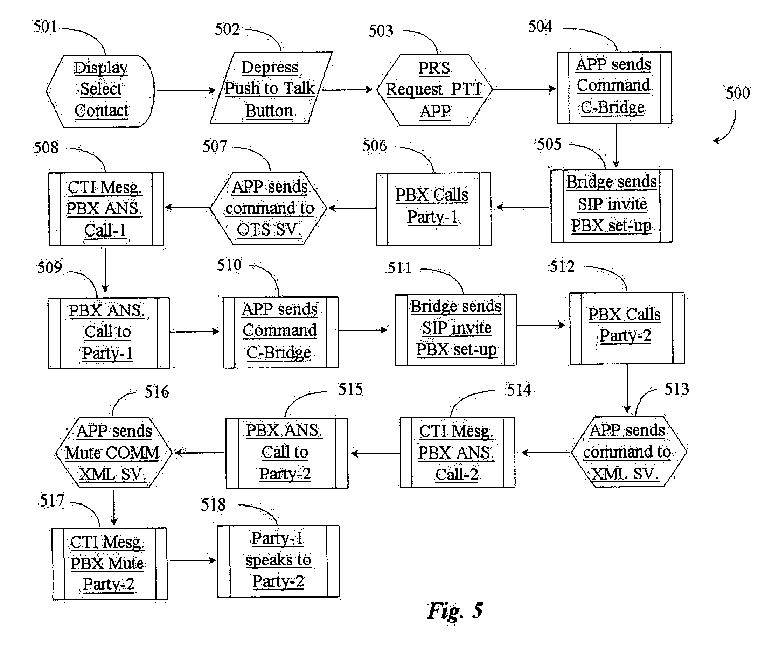

Fig. 5 is a flow chart illustrating a sequence 500 for establishing a unidirectional voice event between 2 parties using a conference bridge. At act 501, party 1 displays and selects a contact using a PBX speakerphone enhanced as a programmable IP touch set known to the inventor. In one embodiment, party 1 is able to view presence information about the contact before deciding to depress a PTT button in act 502. Such presence information may include online or offline status, schedule information, location information, and station status such as busy or not busy with respect to the PBX set or device used as an end point. Preference information may also be pre-indicated such as current preference for accepting or not accepting PTT calls.

In some embodiments, some presence and or preference data may also be automatically delivered after a PTT event is initiated thereby triggering the delivery of the information in the form of a pop up screen, an instant message or a prerecorded voice prompt. More detail about presence information management and preference indications is provided later in this specification.

At act 503, a presentation server (PRS) sends a request to a PTT application to begin call setup between party 1 and the identified contact (party 2). The presentation server is an application that provides intelligence to programmable PBX speakerphones. In an IP embodiment, the PBX phone has a continuous connection to the presentation server. The presentation server accepts mode-button commands from the phone and provides the rich presence information to the display screen on the phone and also provides the dynamic assignment of destination numbers, addresses, and alternate interactive options to the existing mode buttons on the phone.

At act 503, the presentation server sends a PTT request to an application server, the request identifying the selected contact. The application server in act 504 sends a command to a SIP-enabled conference bridge charged with call setup. The command instructs the conference bridge to begin setting up the first call leg of the pending event. At act 505, the conference bridge sends a SIP invite to a PBX switch, leveraging the switch to call party 1. At act 506, the PBX system calls party 1. Immediately after, the application server sends a CTI command to an open telephony server (OTS) at act 507, which, at act 508, formats and forwards the command as a CTI message to the PBX to answer the call set up with party 1. At act 509, the PBX answers the call to party 1. The PBX answer of the call to party 1 amounts to a "take call" operation where a call request is received from the PBX which, establishes the call legs and then takes the call. In this case, the call is answered in speaker mode and not muted.

In this embodiment, the PBX system may be assumed to include several sub-components known to the inventor, which cooperate together to enable unilateral voice events or PTT events over SIP and VoIP wherein the programmable PBX speaker sets are set to IP touch mode. Such thin clients may be considered IP touch sets connected to the PBX system. The sub components, for definition purposes, include a presentation server that is adapted to render content to the IP touch sets and to accept pushbutton events from the phones. The conference bridge is charged with placing calls and receiving calls and for conferencing multiple call legs together for collaboration sessions. An Open Telephony Server, also referred to herein as an OTS is responsible for accepting native CTI commands from an application and for controlling the PBX switch to make and take calls according to embodiments of the invention wherein no user action is required to answer the call. An application server is a CPU running one or more applications that server the series of commands defining the push to talk sequence.

In a VoIP/SIP protocol embodiment, the actual end devices do not have to be PBX sets, but may be any type of IP-enabled communication device having a speaker system that may be controlled to answer through CTI messaging and accept delivery of VoIP without requiring user action to answer the call and also without requiring any kind of call alert. The mechanics of answering the call in speaker mode with a muting of the microphone may be achieved with this function provided as part of the firmware or software on the PBX phone that responds to commands from the PBX switch or other sources. In this way a user does not have to manually activate a push button to answer the call and depress a mute button to prevent sound on the receiving end from being transmitted back to the sender as would be the case with a conventional telephony session.

At act 510, the application server sends a command to the conference bridge to set up the call leg to party 2. The conference bridge then sends a SIP invite message at act 511 to the PBX in order to set up the call legs. The PBX then calls party 2 at act 512, however acts 501-503 are not required to setup party 2. The application knows the destination of party 2 via the original PRS request of act 503. At act 511, the conference bridge sends a SIP invite to the PBX switch to set up the call legs to party 2. At act 512, the PBX switch calls party 2.' The application server then sends a command to the OTS server, which forwards a CTI message to the PBX to answer the call to party 2 at act 514. At act 515, the PBX switch answers the call to party 2. Act 515 is different than act 509. That is to say that in act 509, the speaker is on and the mute is off. At act 514, the speaker is on but the mute is also on forcing a unidirectional voice connection.

At act 516, the application server sends a mute command to the OTS server, which forwards a CTI message to the PBX to mute party 2. At act 518, party 1 speaks to party 2 while the PTT button remains depressed. If the PTT button is released, a request to the presentation server is made to terminate the session and to tear down or deconstruct the call. A time period may be provided at the end of the release action so that a user does not inadvertently release a call by mistake. Perhaps a 3-second rule could be applied so that if party 1 inadvertently released the PTT button, he or she could depress it again within the 3-second period the session would continue in an uninterrupted manner. In this embodiment, the OTS server is analogous to an OTS known to the inventor, which is defined generically as the CTI processor connected to the PBX switch. This server may, in one embodiment, be an XML command server.

In one embodiment the conference bridge is connected to the PBX switch using SIP and VoIP connectivity. However, in another embodiment conventional T1 primary rate interface (PRI) or E1 cabling may be used to carry the signaling and voice using channel associated signaling (CAS) or common channel signaling (CCS). In this way PBX switches that are SIP enabled and those that use conventional trunks may be integrated with the conference bridge and may receive and execute the proper SIP invites or CTI commands.

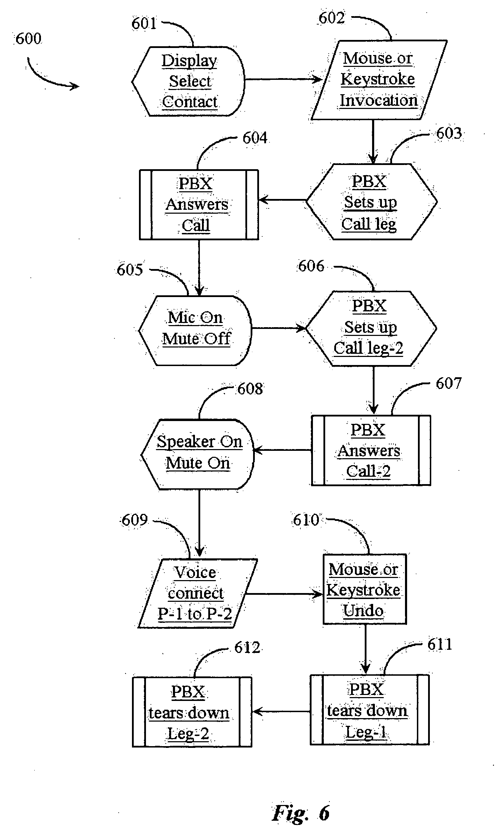

Fig. 6 is a flow chart illustrating a sequence 600 for practicing unilateral voice communication between 2 parties according to another embodiment of the present invention. In one embodiment of the present invention, PBX speakerphones do not necessarily have robust graphics display capabilities and/or multiple mode buttons. In this example, sequence 600 is initiated via a client interface analogous to CL 138 (Fig. 1). It is noted herein that sequence 600 illustrates only the basic acts of the sequence critical to practicing the invention. There may be further acts introduced into sequence 600 for such as presence determination, preference options, and so on without departing from the spirit and scope of the present invention.

At act 601, a first party or party 1 displays and selects a contact using an interface displayed on a PC/GUI. This action may be accomplished using typical PC input mechanisms such as mouse or keyboard manipulations. At act 602, party 1 initiates a PTT call by interacting with the selected contact icon or list entry. In one embodiment, the user simply depresses the select button on the mouse, or performs a modified keystroke action that results in selecting and maintaining the selected state of the list entry or icon for the duration of the pending voice event. It is noted herein that this act is initiated from a PC/GUI associated with the PBX phone.

At act 603, the PBX sets up a call leg to party 1 according to a conference bridge SIP invite, in one embodiment. In another embodiment, the command to the PBX is issued from the desktop of Party 1 directly to a CTI application capable of controlling the PBX according to instructions of the present invention including call-setup and answer. At act 604, the PBX answers the call placed to party 1 and causes the speaker on and microphone mute off state at act 605.

At act 606, the application (CTI sequence) immediately instructs the PBX to set up a call to party 2 (destination). At act 607, the PBX answers the call to party 2 and in act 608 causes a PBX state of speaker on and microphone mute on so that party 1 does not hear voice or background noise from party 2. At act 609 then, party 1 speaks to party 2 over the connection for the duration of the event, the duration of which is controlled by party 1. At act 610 after party 1 is finished speaking, party 1 can then reverse or de-select the list entry or displayed icon representing party 2 on the PC/GUI using mouse manipulation or programmed keystroke. This action initiates a request to the application to tear down the call legs because the initiator has released the session. The application instructs the PBX to deconstruct the connection first to party 1 at act 611 and then to party 2 at act 612.

It will be apparent to one with skill in the art that many more acts and sub acts may be inserted into sequence 600 without departing from the spirit and scope of the present invention such as acts for determining presence information both before and after act 602. In addition, acts for determining an alternate communications mode or action may be inserted before act 608 or even after act 609. Also in this embodiment, command control signaling from the PBX to either endpoint device may be made through internal wiring connecting the sets to the PBX switch.

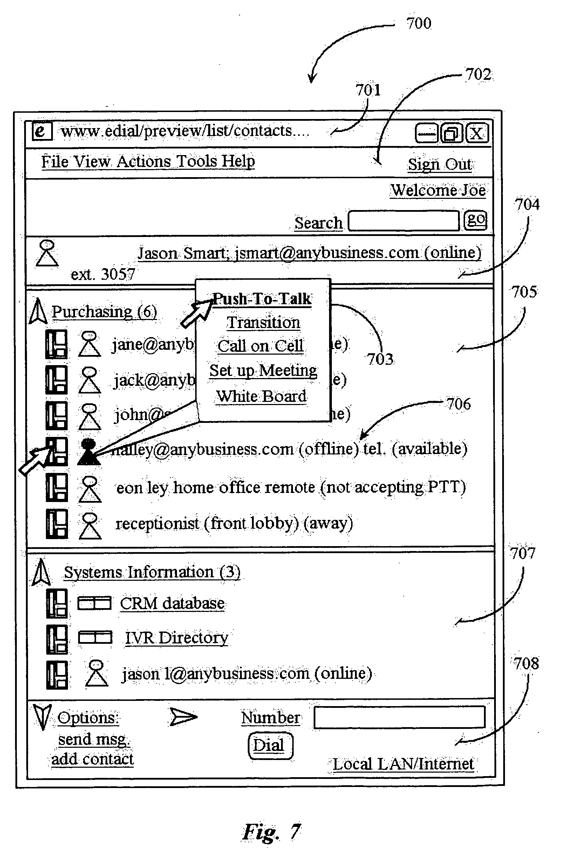

Fig. 7 is an exemplary screen shot 700 of a client interface displayed on a PC/GUI, which may be used to initiate and terminate PTT events according to an embodiment of the present invention. Screen 700 has a title bar 701 indicating, in this example, that the service is a Web-based or hosted service. In this case, screen 700 takes the form of a navigation screen and may be displayable through any network browser application. In one embodiment however, screen 700 is a standalone application and navigates locally on a host sub-network such as a LAN network.

Screen 700 has a toolbar 702, which contains standard pull down interactive options including file, view, actions, tools, and help options. A sign out option is also displayed on toolbar 702 indicating that the current user is signed into the system. A login/logout requirement is not specifically required in order to practice the present invention, but may be desirable in certain network environments in which the invention may be practiced.

Screen 700 has a series of contact list windows displayed, window 704, window 705, and window 707. Window 704 may be, in one embodiment, a search result window listing a contact found and returned as the result of a quick search of one or more contact lists. In this case, the contact Jason Smart is illustrated and includes presence information indicating that he is online and has an extension of 3057 indicating an internal associate or coworker. There may be other presence indicators provided with the contact listing other than online status without departing from the spirit and scope of the invention. In fact, virtually any conceivable presence information may be displayed in. at least summary form for convenience. In this case, a user could mouse over the contact Jason Smart to call up a window to see further presence information about Jason. To initiate a PTT call to Jason the user need only select, for example by mousing over the contact or highlighting the contact and then right clicking on the contact to see further options. Such interactive possibilities are described further below.

Window 705 contains a browse able contact list organized under a heading of purchasing. Therefore, contacts listed in window 705 are those associates working in a purchasing department. Any custom organization of contacts may be practiced. In this particular list, there are 6 entries, Jane, Jack, John, Halley, Eon, and the department receptionist, which may vary in identity dependant on shift. In this example, current displayed presence indicators show that the receptionist is away, Eon is working from home and not accepting PTT events, Halley is offline but available by telephone. Listed contacts Jane, Jack, and John exhibit similar presence information. It is important to note herein that because a user is indicated in an offline state does not necessarily mean that they cannot be contacted via a PTT event. Online status may simply refer to whether or not the user is logged in to the system with a PC/GUI device.

In this exemplary embodiment, the user or party 1 wishes to initiate a PTT event to Halley who is offline (not connected through her PC), but has her speaker set on and available to take calls. Party 1 selects contact 706 (Halley) from the list in window 705, in this case by highlighting the contact and then right clicking the contact to see further options. Those options may be presented in a visible menu screen illustrated herein as a menu screen 703. Therefore, a user in this case uses a standard PC/GUI input device such as a mouse to select Halley and then to initiate a push-to-talk call after screen 703 is displayed as a result of right clicking the contact entry. The just mentioned interactive process should by no means be considered a limitation of the present invention, as other mouse input manipulations are also possible depending upon the setup. For example, instead of highlighting and then right clicking to produce screen 703, a user might mouse over Halley and then immediately see a text box that basically says, "double click to initiate push-to-talk call. In still another embodiment, the text message may say "depress mouse and hold to initiate a push-to-talk call".

In yet another embodiment, PC/GUI input methods other than a mouse may be used to initiate a push-to-talk call. For example, if a PC/GUI has a voice recognition program installed, one might use voice commands such as "scroll down 4", "select", and "push-to-talk". In still another embodiment, keyboard strokes might be employed. In this example, screen 703 contains a PTT option and other contact options. These are Call on Cell, Set up Meeting, and White Board. Other options may also be provided depending on the communications capabilities of the contact and caller.

In one embodiment, a PTT option may be associated to more than one PTT number, for example if a contact has more than one PTT enabled location. In such a case the fact that there is more than one PTT number may be illustrated in display for his user interacting with the PTT option. In one case more than one number is listed and a user may interact with one of those. In still another option the current number depends on the contacts actual location and device he is using. Moreover, in this embodiment, initiation of a PTT event may result in a presence message being sent back to the PTT initiator. For example, if a PTT number is busy or not available, then a message "call my cell" may be sent back to the PTT initiator in the form of an instant message or other visible notification message.

Window 707 lists contacts that include non-human contacts or voice-enabled systems that may be spoken to in order to initiate some task, or to interact with to receive some service including media transfer services. In this case, a human contact Jason is included in the list of window 707 and may be a systems administrator or live help operator. The other two contacts include a customer relations management (CRM) database and server, and an interactive voice response (IVR) navigable directory. Presence information may also be available on these systems such as system down for repair or other alerts that may be triggered from a PTT event.

A user may highlight and select a desired system to initiate a PTT event to that system. In this case, the user may select CRM database, for example, and initiate a PTT event to that system simply to synchronize data with the system and a local cache or data store. He or she may vocalize the command "synchronize with" and then supply the destination address of the data to be used in the process. In this case, the voice is one way but the system opens a channel to the vocalized destination and performs the task. At the end of or after a task is successfully completed, the system may initiate an automated event back to the user and may vocalize such as "task completed" or "unable to complete task" as the case may be. It is noted herein that in the case of interaction with an automated system, a PTT event may be initiated but it may not be necessary or desired to mute the outgoing audio on the system side. In fact call escalation from a PTT event to a normal interactive session may be desired in some cases.

A user may initiate a PTT event to the IVR directory listed in window 707 for the purpose of searching out a specific individual or system, for example, an entity that may not be illustrated on the user's list for PTT communication. The vocalization may be a simple command like "search for system 532". In this embodiment, rather than respond with an IVR response option, the IVR system may initiate a PTT response after the user has released the system the response, a synthesized voice prompt telling the user the IP address or telephone number of the found system. In one embodiment, the actual number is dynamically assigned as a priority number to a new list entry added to the user's contact list for systems. In another embodiment, the user may issue the command using a PTT event and then transition that event to a standard IVR bidirectional voice session enabling full query and response in both directions. There are many possibilities. It should be noted herein that in the event of a PTT event directed to a media server or other automated system, microphone muting and speaker on functions may not be necessary at the destination if that destination is a server or other automated response system.

Screen shot 700 has a lower option pane or window 708, which contains communications options like send message and add contact. A manual number dial interface is also provided for allowing the user to enter any telephone number or equivalent and invoke the icon dial to initiate the call. This is a standard dialer function and is not particularly relevant to the present invention. The inventor notes that many of the features illustrated herein are not required in order to practice unilateral voice event communication according to embodiments of the present invention. While a user may initiate a PTT event from a PC screen, the exact functionalities of the invention may be blended with or integrated with many other forms of communication already available to a user like IM, click-to-call, screen sharing, presence reporting, and so on.

It will be apparent to one with skill in the art that screen 700 may be just one of many possible screen shots that are available through a client interface like CL 138 described with respect to Fig. 1 above.

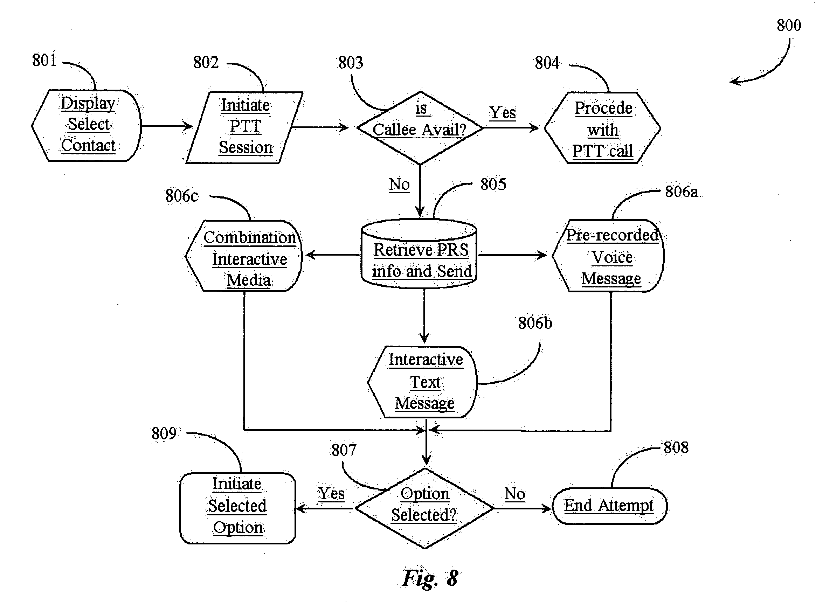

Fig. 8 is a flow chart illustrating a sequence 800 for determining presence information and sending a response triggered by an incoming PTT event according to an embodiment of the present invention. Sequence 800 begins in the same fashion as other illustrated sequences with act 801 wherein the initiating user highlights and selects a contact for sending a PTT event to. In this example, there might not be any pre-known presence information about the communications state or location presence of the contact. At act 802, party 1 initiates a PTT session in the fashion described repeatedly above. At act 803, the system consults presence information and preference information pre-configured by the contact and available locally. In this case, the first presence indicator consulted by the system is simply if the contact is available for a PTT event. If yes then at act 804, the PTT event proceeds undisturbed. The contact may, however, be away for lunch, temporarily assigned to another task, or the contact may be consulting a client in person. In this case temporary, often momentary absence of a contact from a station may be treated with a pre-configured away message. Therefore, if the contact is determined to be away from his or her station or unavailable at act 803, the system may at act 805 retrieve and send any presence message the contact has provided for the purpose.

Available options include, but are not limited to delivery of a pre-recorded voice message 806a, an interactive text message 806b, or a combination of voice and text message 806c. Text message 806b is not required to be interactive at the receiving end, but may be so to enable the user to select an alternative action. In a preferred embodiment, such data and, or voice response is automatically triggered any time the PBX attempts to setup the call to the contact or receiving party. An intermediate act for checking the availability of the contact may be provided and the system may automatically forward whatever instruction or, in some cases routines that the contact has set up for away mode back to the PTT event initiator. A system handling a PTT attempt where the called party is not available may include any suitable predetermined handling of the incoming PTT event according to system rules and presence indicators known in advance. The instrument may include such as redirect call, forward call, swapping PTT number, redirect to a local server, or one of a variety of automated responses.

At act 807, the initiating party receives an instant message or screen popup or even a voice prompt in response to his or her PTT attempt. In the case of an instant message or screen pop-up, there may be some interactive options such as IM link, email option, a subsequent PTT option, or an option for initiating a conventional call to another number. At act 807 if the user does not select an option, then at act 808 he or she may end the attempt to communicate with that contact. On the other hand if the user selects an option then at act 809 that option may be initiated in similar fashion as the original PTT attempt. In one embodiment, the option may be a subsequent PTT number sent to the initiator of the event to the first PTT number giving the initiator the option of reaching the user at the new number.

The user may interact with these options directly from the message or pop-up sent. In one embodiment where an interactive desktop screen such as screen 700 is used, an option for assigning a new PTT number associated with alternative device operated by the contact may be presented wherein that number or address information is appended to the contact data and prioritized so that the next PTT initiation action uses the temporarily prioritized number. Such a dynamic assignment may also be implemented with programmable indicia or mode buttons resident on the initiators PBX telephone. At act 809 the user may initiate the selected option and continue attempting to reach the contact by the communications mode associated with the initiated option.

One with skill in the art of presence information management will appreciate that there are a wide variety of presence states that may be defined and for which alternative treatments can be created. For example, if a particular contact is on vacation for a week, an instant message containing the number of the contact's assistant may be provided every time a PTT attempt is made to that particular contact. In some embodiments, routing routines may be incorporated in responses to failed PTT attempts whereby the initiator may choose from a variety of treatments including requesting a call back, leaving a voice message, leaving a contact number, establishing communication with a related party to the contact, or establishing connection to an automated system.

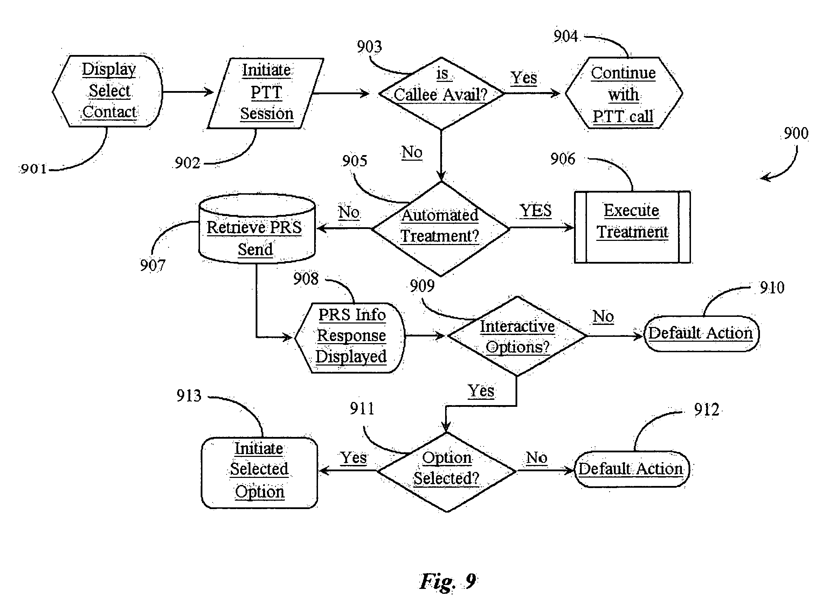

Fig. 9 is a flow chart illustrating a sequence 900 for attempting a PTT event with an option of automated treatment or interactive alternative based on presence information according to an embodiment of the present invention. At act 901, the user displays and selects a contact for initiation of a PTT event. At act 902, the user (party 1) initiates a PTT session. At act 903, the system determines whether that contact is available at the dialed number or equivalent. If the contact is available at act 903, then at act 9.04 the PTT event proceeds undisturbed. If at act 903, it is determined that the contact or callee is not available for the current PTT session, then at act 905 the system determines if there is an automated treatment set up as a mode for all PTT attempts. If there is an automated treatment, the treatment is executed immediately at act 906. Such automated treatment may include rerouting to another contact, rerouting to an automated attendant, re-initiation of a conventional connection (bi-directional), placement in queue, rerouting to a media sever, or simply ending of the call.

If there is no predetermined automated treatment routine available at act 905 then at act 907, any relevant presence information is retrieved and sent to the initiator. Once received at act 908, the information is automatically displayed on the initiator's desktop, device or screen. At act 909 the user may determine if there are any interactive options presented that might be sufficient alternatives for the PTT event including the possibility of calling another device of the contact such as a cellular telephone or personal digital assistant (PDA) for example. If an option is not selected or is ignored, then a default system action may occur at act 912 like taking the user back to the list of contacts for a new selection. If a user selects an option presented at act 911 then at act 913 that option may be initiated.

One with skill in the art of presence management and automated call routines will appreciate that alternative treatment of a PTT event attempt based on presence information and preference settings may vary widely according to the situation at hand without departing from the spirit and scope of the present invention. In one embodiment, a contact on vacation may set a presence indication informing of his or her status and an alternate contact that may assist callers, such contact having a PBX set or device. In this case, the alternate PBX number or extension may be automatically and transparently assigned to the caller's PTT mode button even if the contact is not listed at the caller's station.

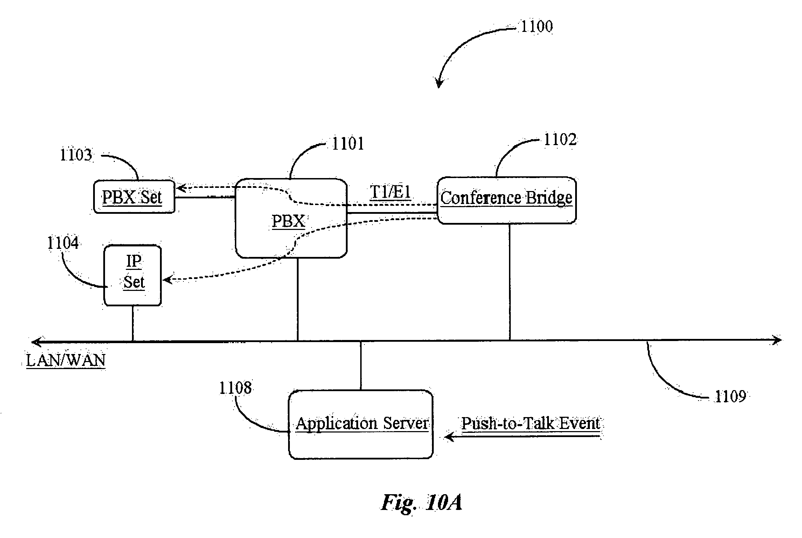

Fig. 10A is a block diagram illustrating a communications network 1109 supporting a push-to-talk system architecture 1100 according to an embodiment of the present invention. Network 1109 may be a LAN, a WAN, public or private that supports SIP and RTP and TCP/IP protocols among others. Network 1109 may be a local segment internal to an enterprise domain or may span more than one local network segment such as a campus WAN. An application server 1108, analogous to server 123 of Fig. 1 is the focal point for all PTT requests from any caller to any callee, or in some cases, a callee group. In this case, network 1109 carries all of the communications locally to all of the end devices, with the exception of PBX set 1103, which is connected to PBX via telephone wiring in this case. In another embodiment, the PBX set may be connected directly to network 1109 as was depicted in the enterprise architecture illustrated in Fig. 1 of this specification. The variety of devices that may be enhanced to practice the preset invention is illustrated in this example including a LAN/WAN connected IP phone set 1104, and PBX set 1103. A conference bridge 1102 is provided as an intermediary between the PBX 1101 and any user initiating a PTT event.

IP set 1104, for example, may be used to initiate a PTT event to one or more other end point devices leveraging application server 1108 and conference bridge 1102. For example, conference bridge 1102 has the ability to setup multiple call legs for the purpose of conference collaboration.

To better understand this simplified example; consider that the operator of IP set 1104 initiates a unilateral voice event to PBX set 1103 by depressing a PTT button. The request is made to application server 1108 as is illustrated herein by a directional arrow labeled Push-to-Talk Event. The event may also be initiated from a PC screen of a network-connected PC, which is not illustrated in this example.

Upon receiving the PTT event command, application server 1108 commands the conference bridge to set up call legs to devices 1104 and 1103 as is illustrated herein by arrows representing the call legs emanating from conference bridge 1102 through PBX 1101, and to sets 1103 and 1104. As it can be seen in this diagram, one call leg goes to the caller and the other call leg goes to the callee.

In the event that PBX 1101 does not support SIP as is the case of this example, then conference bridge 1102 has connection to PBX 1101 via T1 or E1 cabling. Of course, both sets 1103 and 1104 must be able to off-hook automatically in speaker mode as described further above. The answer function may be achieved assuming PBX 1101 is CTI enhanced in this example (CTI enhancement not illustrated). If the PBX is SIP enabled and has direct connection to the LAN/WAN network, it may be leveraged to answer the calls set up to the callee device 1103. It is noted herein that in a SIP embodiment, all end devices must be able to be answered without off hooking a handset, and must optionally be able to accept a mute command. Such an embodiment is illustrated further below.

In a very basic sequence of commands in this example, application server 1108 having received a PTT event from set 1104 commands conference bridge 1102. The command is to set up two calls, one to the caller (1104) and one to the callee (1103). Application server 1108 then commands PBX 1101 to answer the calls placed to the caller and to the callee. Application server 1108 then commands PBX 1101 to mute the leg of callee 1103 so that caller 1104 does not hear caller 1103 or any background noise over the connection. In one embodiment, the callee's microphone may be muted by conference bridge 1102 instead of by PBX 1101. In a preferred embodiment conference bridge 1102 and PBX 1101 both support SIP. This case scenario is illustrated further below.

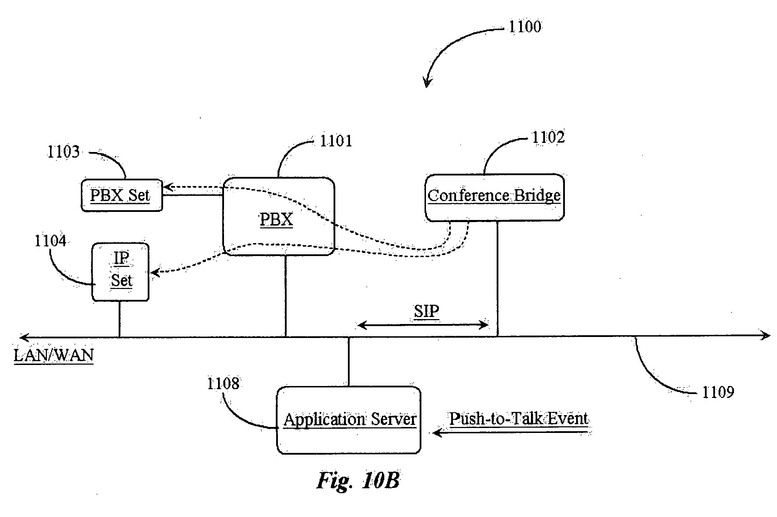

Fig. 10B is a block diagram illustrating system architecture 1100 of Fig. 10A enhanced with SIP capability. In this example there is no requirement for trunk T1/E1 between conference bridge 1102 and PBX 1101 because SIP is used to initiate the call setup procedure.

In a preferred embodiment and in this example, call setup and media transfer may occur via SIP. The sequence takes place exactly as it is described above with reference to Fig. 10A with the exception that SIP is the protocol used to carry the commands and to command the PBX to answer the calls and mute the callee's leg.

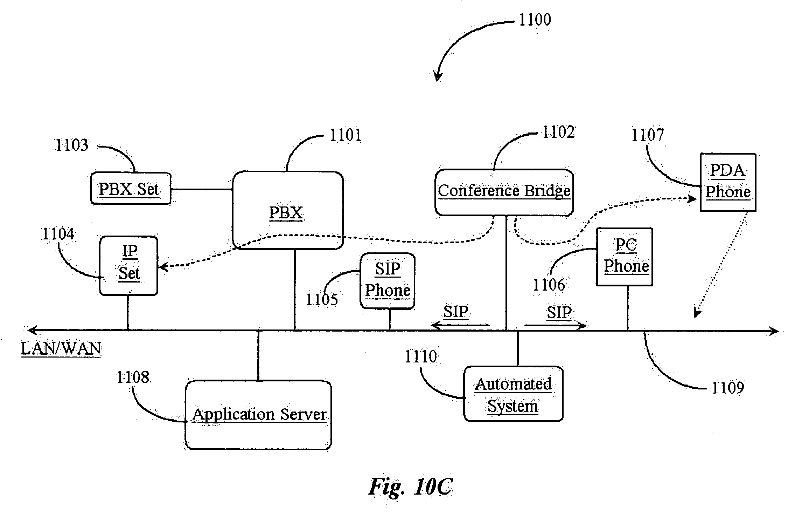

Fig. 10C is a block diagram illustrating a SIP embodiment with respect to the system of Fig. 10B with added connected devices illustrated. With respect to the SIP embodiment described above, it is clear that system 1100 may support a wide variety of SIP devices. For example, a SIP phone 1105 is illustrated in this embodiment and connected to LAN/WAN 1109 for communication. A PC 1106 with a SIP soft phone installed thereon is illustrated and is connected to LAN/WAN 1109 for communication. A PDA 1107 with a SIP soft phone installed thereon is illustrated in this example as connected to LAN/WAN via a wireless protocol.

In this example, a unilateral voice event is initiated from IP set 1104 by depressing a Push-To-Talk button or icon on the set. The PTT number is that of PDA 1107. Application server 1108 receives the event and sends an SIP command to the conference bridge 1102 to set up the calls, one to IP set 1104, and one to PDA 1107. First, conference bridge 1102 calls IP set 1104 using SIP. Then conference bridge 1102 places an SIP call to PDA 1107. Server 1108 then issues a command to the PBX to answer the call placed to IP set 1104. Server 1108 then issues a command to the conference bridge to answer the call to PDA 1107. The conference bridge then connects the parties.

With respect to the former embodiment using SIP, it is plausible that the conference bridge may be used to send a unilateral voice event initiated by one party to multiple recipient parties thereby establishing a one-to-many unilateral voice event emulating a paging system except for the benefit that there may be a wide variety of recipient devices that may be pre-designated, zoned or otherwise selected to receive the event.

Referring now back to Fig. 10C, IP set 1104 may initiate a PTT event to multiple other devices, in effect using the conference bridge as a paging system. From the perspective of the conference bridge, all of the receiving participants may be contacted based on a single PTT event initiated to the bridge using a single number. The conference bridge may then, based on the setup instructions, make all of the other connections required for a unilateral voice event to be heard by all of the invitees.

In another embodiment, automated system 1110 may be programmed to initiate an ad hoc group alert or instruction session using conference bridge 1102 to establish the connections. The conference bridge may initiate multiple Sip invites based on a pre-designated audience list. For example, a user may set up an ad hoc speaker event by grouping PTT numbers for the bridge and then publishing the list to the bridge.

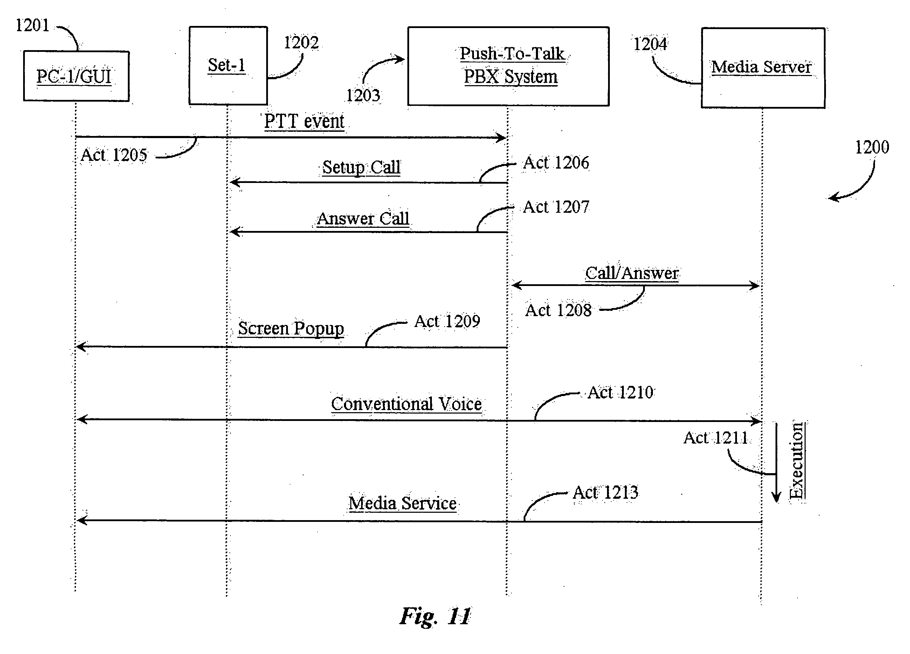

Fig. 11 is a sequence diagram 1200 illustrating interaction with a media server 1204 according to an embodiment of the present invention. A system 1203 may represent more than one system implement and may be assumed herein to include at least PBX switching capability, CTI capability and application control capability as represented further above in this specification. Media server 1204 may be a voice-activated server capable of serving text, voice, video, and graphics. In this embodiment, it may be assumed that set 1202 and PC/GUI 1201 are associated and are operated by a same user.

In act 1205, a user operating PC/GUI 1201 initiates a PTT event. This event may be initiated through a provided interface on the PC screen and may be manipulated by mouse, keystroke, or other input methods or devices. The PTT event, or more particularly a request is sent to system 1203 to a control application similar to or identical to those previously described.

At act 1206, a call is placed to PBX set 1202 by system 1203. At act 1207, the system answers the call previously set up at act 1206. Now a connection is established between the user's phone and the switch, the state originally requested from the PC of the user.

At act 1208, the system places a call to media server 1204. This is not a PTT call, rather a conventional call. The media server answers or picks up the call in the same act. Now the media server has a connection established to the PBX switch. It is important to note here that the media server is voice enabled to both understand voice commands and to respond using synthesized voice responses to user prompts or commands. The purpose of this call is not simply to speak to the server however. The main goal is to command the server to send something to the requestor over a separate connection.

Therefore, in act 1209, a screen pop is sent to the user's PC 1201, the message providing a link to the media server which may be navigated to by the user or which may automatically execute upon receipt. In one embodiment, the channel opened between the initiator and the media server is a single channel, the originating end shared by PC/GUI 1201 and by Set 1202. For example, the screen pop delivered in act 1209 may be a conversational interface through which the user may converse with the media server and may hear the responses of the media server. In another embodiment, the media and messaging may occur on the PC while the voice interaction occurs from the PBX telephone set. In act 1210, there is a conventional voice channel open between the user's PC/GUI 1201 and the media server 1204. Therefore in this example, the set is not specifically involved after initial call setup and answering.

During the state of act 1210, the user may converse with the media server and utter commands thereto for the purpose of eliciting one or more responses from the server including service of media. Assuming this is the case in this example, at act 1211, the server executes one or more voice commands issued to it by the user and in act 1213, media service occurs as exemplified herein with a service of some media type to the user at PC/GUI 1201.

Although this particular sequence implies that act 1213 is a one way channel, it is not required in order to practice the present invention. In some embodiments, depending on server type, the user may upload documents or other media to the server. Data synchronization may be a goal and data may travel in both directions. Moreover, server 1204 may be any type of accessible server such as a directory server, a presence server, an information server, a search engine server interface, an email server, and so on. There are many possible server configurations that may be employed. The unique aspect of this type of server interaction is that the server was connected to with a one touch initiation or task and that the connection may be terminated by simply releasing a button used to initiate the contact.

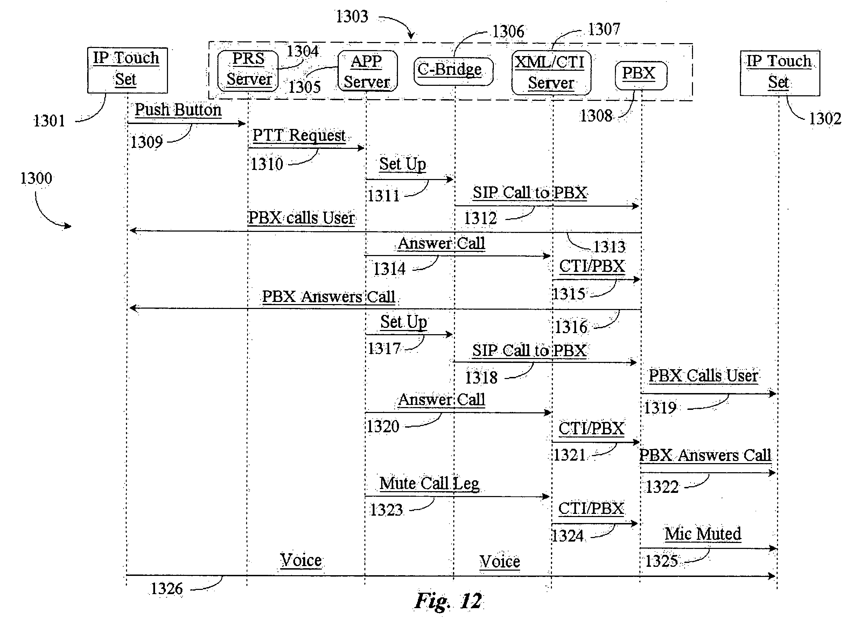

Fig. 12 is a sequence diagram 1300 illustrating an advanced embodiment for establishing a unilateral voice event between two IP touch set terminals. Diagram 1300 illustrates a sequence as practiced using a robust push-to-talk system 1303 to enable IP unilateral voice event between IP touch sets 1301 and IP touch set 1302. It may be appreciated by one with skill in the art that an IP touch set maybe a dumb terminal in many implementations. As such these sets may rely on an external intelligent server to provide intelligent functions to be operated from those sets.

In this embodiment, system 1303 includes multiple components some of which were already described further above in relation to other embodiments. System 1303 includes an active presentation server (PRS) 1304 that is adapted as an external application providing intelligent enhancement for IP touch sets 1301 and 1302. Therefore, IP touch sets 1301 and 1302 may be assumed logged into PRS server 1304. System 1303 includes an application server 1305 adapted to relay and to format requests received to a conference bridge application 1306. Conference bridge 1306 is adapted to set up calls. In this case, SIP messaging is supported. System 1303 includes a PBX 1308 adapted to answer calls set up by conference bridge 1306. In order to mitigate communication between PBX and conference bridge 1306 for answering calls, an XML or suitable CTI server 1307 is provided within system 1303 to send CTI messages for example in a format understood by PBX 1308. System 1303 may be housed on one powerful machine connected to the network.

To initiate a PTT request in this embodiment a user pushes a PTT button on his touch set 1301 at act 1309. Act 1309 is picked up by PRS server 1304, which in turn forwards the request to APP server 1305 at act 1310. App server 1305 sends a command to conference bridge 1306 to set up a call to touch set 1301 at act 1311. At act 1312, the conference bridge performs a SIP call to PBX 1308 instructing the PBX to call touch set 1301 completing call set up.

At act 1313, PBX 1308 places a call to touch set 1301. APP server 1305 then sends a command to XML/CTI server 1307 in act 1314, the command instructing the server to answer the call placed by PBX 1308 at act 1313. At act 1315 the XML/CTI server sends a CTI command to PBX 1308 to answer the call placed to touch set 1301. At act 1316, the PBX answers the call and a connection between touch set 1301 and the switch is established.

At act 1317, APP server 1305 commands conference bridge 1306 to set up the second call to IP touch set 1302. At act 1318, the conference bridge performs a SIP call to PBX 1308, instructing the PBX to place a call to IP touch set 1302. In act 1319, the PBX places a call to IP touch set 1302. At act 1320, the APP server commands the XML/CTI server 1307 to answer the call placed by the PBX to touch set 1302 in act 1319. At act 1321, the XML/CTI server sends a CTI command to PBX 1308 to answer the call placed in act 1319.

At act 1322, PBX 1308 answers the call placed to IP touch set 1302. Because IP touch set 1302 is the destination party, APP server 1305 issues a command to XML/CTI server 1307 to mute the microphone of IP touch set 1302 so that the user of IP touch set 1301 does not hear any noise or voice from IP touch set 1302 over the established connection. At act 1324, server 1307 sends a CTI command to PBX 1308 to mute the microphone of IP touch set 1302.

In act 1325 the PBX mutes the microphone of IP touch set 1302 by sending it a CTI command. At act 1326 then a unilateral voice session is established between the touch sets with voice audible at IP touch set 1302 as long as the session is in progress. The session may remain open as long as the user of IP touch set 1301 does not release the call by releasing the push button used to initiate the event. Releasing the button terminates the session and causes the connection to be torn down.

The methods and apparatus of the present invention may be practiced over a LAN or WAN including the Internet and connected sub-networks. The present invention may be practiced party-to-party, party-to-system, system-to-party, party-to-group, and system-to-group without departing from the present invention.

The present invention may also be practiced using some, but not all of the separate components illustrated in the various embodiments described. For example, PTT events can be initiated using a CTI-enabled PBX and connected PBX telephones without additional conference bridge functionality or SIP protocol. PTT events can be initiated from a PBX or from a PC accessible to the PBX. PTT events over SIP and VoIP may be initiated and established using a soft switch to connect to SIP-enabled devices instead of through a CTI-enabled PBX switch.

The following features, separately or in any combination, may also constitute advantageous embodiments of the described or claimed invention:
- The claimed and/or described system, wherein the requesting node and or the receiving node are enabled for session-initiation-protocol and voice-over-Internet-protocol.
- The claimed and/or described system, wherein the receiving node is a voice-enabled automated media server and the requesting node is one of one an Internet protocol telephone, a PBX telephone, a cellular telephone, a SIP phone, or a software telephony application resident on a computing appliance.
- The claimed and/or described system, wherein the command sequence is a CTI command sequence executable at a PBX switch or a soft PBX switch.
- The claimed and/or described system, wherein the single action performed to request the event is one of pushing a button, selecting a display icon, or voicing a command.
- The claimed and/or described system, wherein presence information is returned over an established connection if a recipient is not available.
- The claimed and/or described system, wherein the first server is a presentation server, the second server is an application server, and the third server is a CTI/PBX telephony server.
- The claimed and/or described system, including an additional application adapted as a conferencing bridge.
- The claimed and/or described method, wherein in act (e), answering the call includes activating the mute state of the microphone on the device to mute outgoing voice and background noise.
- The claimed and/or described method, wherein in acts (d) and (e), answering the call is performed with no physical tasks required at the recipient device.
- The claimed and/or described method, further including an act (g) for requesting release of the recipient node of the event from the point of the requesting node, the release action causing tear down of the connection to the one or more devices.
- The claimed and/or described method, further including an act (g) for returning a message to the requesting node in the event that the user of the recipient node cannot take the event.
- The claimed and/or described method, wherein the message is one of an instant message, a voice message, or a text message.
- The claimed and/or described method, wherein the message includes interactive options for contacting the recipient.
- The claimed and/or described method, further including an act (g) for escalating the unilateral voice session into a conventional call.
- The claimed and/or described method, wherein the request for escalation is achieved through a single action performed by the requestor.
- The claimed and/or described method, wherein the single action is one of depressing a mode button, clicking on a PC display icon, or voicing a command.
   The methods and apparatus of the present invention should, in the light of the embodiments described and possible embodiments not described, which may be envisioned by the skilled artisan having access to the described embodiments, be afforded the broadest possible scope in consideration of the claims. The spirit and scope of the present invention is limited only by the claims, which follow.

## Claims

1. A system for establishing a unilateral voice communication event between at least two nodes connected to a network the event request initiated by a single action performed at a requesting node and the established event automatically answered without any physical tasking required or event alert received by the recipient node comprising:
a first server operable on the network for receiving a request from a requesting node on the network and for forwarding the request for execution;
a second server operable on the network having communication access to the first server, the second server for formatting the request in the form of a sequence of commands based on information associated with the request, the command sequence to establish the event; and
a third server operable on the network having communication access to the second server, the third server for receiving commands of the command sequence and for establishing the event and implementing at least one state of operation on the recipient node.

2. The system of claim 1, wherein the network is a local-area-network connected to a private branch exchange.

3. The system of claim 1, wherein the network is a wide-area-network.

4. The system of claim 1, wherein the requesting node and the receiving node are private-branch-exchange (PBX) speakerphones connected to a computer-integrated-telephony (CTI)-enhanced PBX telephony switch.

5. The system of claim 1, wherein physical tasking comprises manually off hooking a handset or interacting with any feature on the recipient device and event alert includes any audible or visual indication of the event.

6. A method for establishing a unilateral voice event between a requesting node and one a recipient node over a network including acts for:
(a) identifying, at the requesting node, the recipient node to receive the event;
(b) sending a request to an application to establish the event;
(c) executing a command sequence of instructions to build the connection over which, the event will be carried;
(d) placing a call to and answering the call at the requesting mode according to the command sequence;
(e) placing a call to and answering the call at the recipient node according to the command sequence ; and
(f) bridging the established connections for active use.

7. The method of claim 6, wherein in act (a), the sending node and the recipient node are one of or are a combination of a PBX telephone, an IP telephone, a SIP telephone, a cellular telephone, or a software telephony application.

8. The method of claim 6, wherein in act (b) the request is achieved through a single user task comprising pushing of a mode button on a phone set or invoking an icon or list entry in a graphics user interface (GUI) for the duration of the event.

9. The method of claim 6, wherein in act (c), the sequence is a CTI command set.

10. The method of claim 6, wherein in act (d) and in act (e), placing and answering calls is performed by a CTI/PBX switch upon instruction from a conference bridging application.
